# EUROPEAN PATENT APPLICATION

(11) **EP 1 049 004 A1**
(43) Date of publication of application: **02.11.2000**
(21) Application number: 00201158.3
(22) Date of filing: 31.03.2000
(51) Int. Cl.: G06F 9/44

(54) **Method and system for dynamic specialization of software with profiles**

(30) Priority: 31.03.1999 NL 1011713
(71) Applicant: Stichting Telematica Instituut, 7500 AN Enschede (NL)
(72) Inventor: Eertink, Egbert Hendrik, 7468 EJ Enter (NL)
(74) Representative: Land, Addick Adrianus Gosling

(57) **Abrégé**

The present invention comprises a method for the dynamic specialization of a predetermined software-object structure, wherein a set of attributes with assigned type is defined as profile using a profile definition language, and wherein a profile definition is linked to a software-object, wherein the data stored by the software-object is provided with a reference to the profile definitions.

The present invention also comprises a system for applying the method as claimed in any of the foregoing claims, wherein the system comprises:
- one or more processors; and
- one or more memories in which the profile definitions, the object structure and the application data can be stored.

## Description

Software must usually be specialized for determined applications and/or clients. Particularly applications for data files and modeling environments - must then support company-specific or application-specific specializations.

Software systems exist in which so-called properties can be assigned to existing fixed structures, such as NAD (Name-Address-Domicile) data files, design/modeling languages and file systems. Such software - systems offer too limited possibilities of specializing structures for a determined use by end users, since they involve single attributes with unassigned type.

The present invention has for its object to enable a more powerful specialization of software products.

The present invention provides a method for the dynamic specialization of a predetermined software-object structure, wherein a set of attributes with assigned type is defined as profile using a profile definition language, and wherein a profile definition is linked to a software-object, wherein the data stored by the software-object is provided with a reference to the profile - definitions.

A profile is a data structure with assigned type which, independently of determined application-specific structures, such as the syntax of a language, the structure of a table of a data file, can be defined and linked dynamically to these fixed structures of a software component. End users can thus manage the profiles themselves, modify them or add new profiles, whereby end users are able to configure optionally compiled software in a structured manner. By means of software support of profiles the application-developer gains access in simple generic manner to the structures of the profiles and the values of attributes from profiles, so that applications can make effective and efficient use of the obtained configur-ability.

The profiles are specified as a set of attributes with assigned type. A profile definition language is developed for the definition of profiles. Each of the attributes in a profile can have a standard value which can be overwritten by the user. Since - profiles can be freely specified, they can be used for a large number of applications. End users can thus dynamically specialize or flexibly extend an application.

A profile is linked to a software-object, wherein a software-object is an instance of an application-specific software-object structure. Reference is otherwise made to the generally available text books in the field of object-oriented programming.

In a preferred embodiment the software-object structure is a model which is determined using a relatively thin modeling language. Applicant has developed such a graphic design/modeling language with which complex systems, such as company processes, wherein discrete events take place, can be modeled and analyzed. This involves a thin language, with which only the barest essentials for providing insight into such systems are displayed.

The present invention is particularly suitable for allowing a user to add information in order to carry out for instance the following analyses of operations:
- advanced quantitative calculations, for instance run times and/or costs;
- functional analysis, for instance to indicate the type of activity involved, and how these activities are executed;
- export to implementation platforms, for instance additional information for the purpose of instantiation of workflow management systems or Enterprise Resource planning systems from the developed models.

One, two or more profiles can for instance be linked to a software-object. This means that a set of attributes, or a profile, can be assigned to an object or deleted in one operation. A set of attributes forming a logical whole can therefore also be represented as one whole. It is possible to indicate in the case of each profile to which application-specific structures or object types it can be linked, and to which it must be linked.

In a further embdiment it is also possible to link a second profile to a first profile linked to a software-object, wherein in a manner similar to the so-called inheritance principle new attributes can be added and determined limitations of values can be overruled.

In a further embodiment according to the present invention the profile definition language supports one or more of the following concepts:
- built-in types: integer, string, boolean, real, time; currency
- type-construction: enumerated types, struct, union, list, sets, type-alias;
- profile-definition: set of attributes with a type and an optional default value;
- inheritance: a profile-definition can build on a maximum of one other profile definition;
- attributes are identified on the basis of their name;
- predetermined profiles can only be assigned to predetermined object-types; and/or
- determined profiles can always be assigned to determined object-types.

The profile definition language describes which profiles there are, which attributes are in the profiles and how the different profiles are related. Owing to the above stated support the profile definition language has a great power of expression.

Profiles can be supported in tools by means of an expandable software framework implemented in C++. Profiles can herein be used in all classes which implement the interface known as "Profileable". This C++ framework is preferably independent of the used operating system, and can provide the following functions:
- run-time loading of profile definition file;
- support for parsing and unparsing of profile - values;
- support for user-defined editors of profile values; and
- memory-management of profile values.

The interface "Profileable" has mechanisms for the purpose of:
- assigning, deleting and/or reordering profiles;
- storing or recovering attribute values for profiles;
- retrieving current profile values; and
- streaming or displaying profile values from/to body text.

A mechanism is also supported for representations of fields in profile definitions, whereby different languages, such as Dutch and English, can be used.

The method according to the present invention can be applied in a normal hardware environment, such as (a network of) PCs, workstations and the like.

The present invention also provides a system for applying the method according to any of the foregoing claims, wherein the system comprises:
- one or more processors; and
- one or more memories in which the profile definitions, the object structure and the application data can be stored.

Further advantages, features and details of the present invention will be elucidated on the basis of the following description of an embodiment thereof with reference to the annexed drawing, in which:
fig. 1 shows a diagram of the relations between applications and profile definitions;
fig. 2 shows a diagram elucidating the method and steps for making a profiled model;
fig. 3 shows an example of a screen of a so-called design studio for the process model according to fig. 1 and 2;
fig. 4 shows an example of a further screen of a so-called design studio for the process model according to fig. 1 and 2; and
fig. 5 shows an example of yet another screen of a so-called design studio for the process model according to fig. 1 and 2.

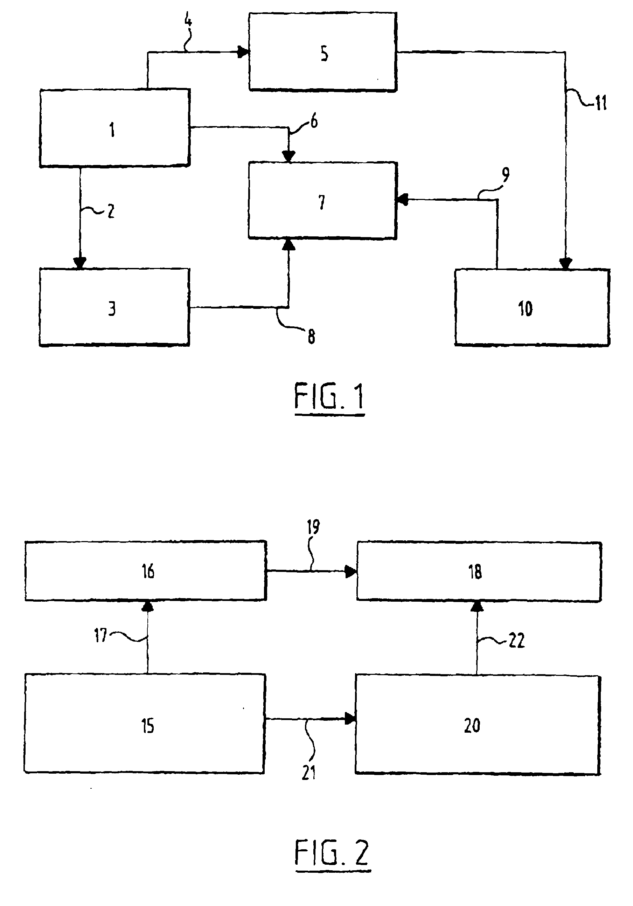

An application 1 (fig. 1) is based according to arrow 2 on an object structure 3. As designated schematically by arrow 4, the application 1 can read/write to the stored application data 5. As designated schematically via arrow 6, the application makes use of profile support 7, to which as according to arrow 8 the type names of object structure 3 are made known. The profile support 7 makes use of profile definitions 10 as according to arrow 9. The application data 5 also refer to the profile definitions 10, as designated schematically with arrow 11. The data stored by an application is thus ultimately dependent on the object structure and the profile definitions to which reference is made from these definitions. Modifications in the profiles will not result, or hardly so, in incompatibility. i.e. in data which can no longer be processed.

The above outlined concept with profile support has advantages, because:
- attributes associated with a determined application and/or field of application and/or end user can also be added jointly to an object; and
- the attributes are type-assigned, whereby application with profiled objects automatically shows the correct input screens for attributes, including the proper consistency checks and the like.

A drawing attribute for instance thus requires a method of input differing from a text attribute or date attribute.

An example of a profile definition is given below:

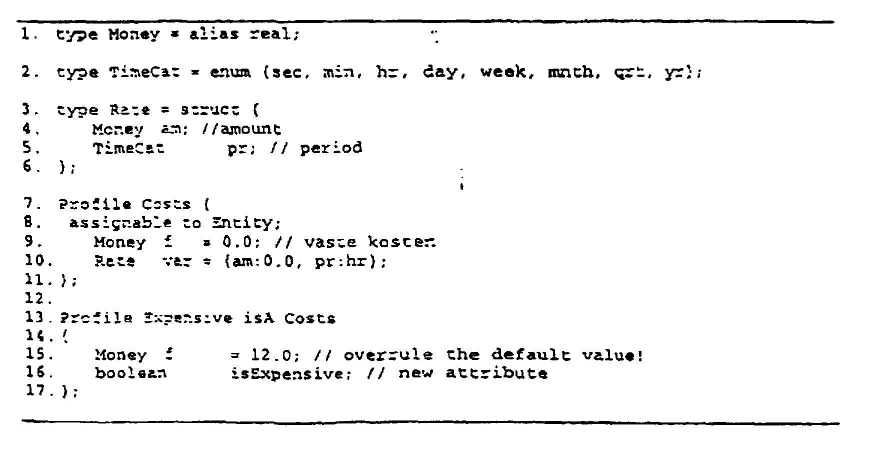

Line 1 declares the type Money as an alias for the built-in type real. Line 2 declares an enumerated type, and lines 3-6 a structure type with two fields. Lines 7-11 then specifies a profile which can only be assigned to the object-type Entity. This profile combines two attributes, each with a default value (after the "=" symbol). Lines 13-17 illustrate that it is possible to - derive new profiles dynamically from existing ones, for instance by setting new defaults or by adding new attributes.

In addition to profile definition files, so-called profile label files can also be read, whereby different languages, such as Dutch and English, can be used. The profile label file corresponding with the above example is given below as example: 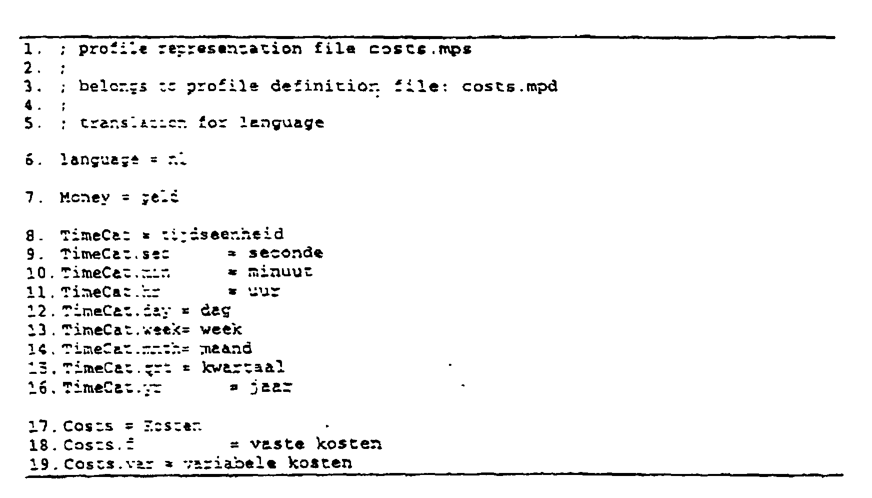 Lines 1-5 are comment, line 6 specifies the header, in which a language is defined in accordance with the ISO denotations for languages (nl = Dutch, and en = English, en-gb = UK English etc.). A label is then given for a type, attribute and/or profile name via the 'name = value' principle. This mechanism ensures that the presentation of data is separate from the storage of data.

Software support for profiles can be reused in a random software environment, provided the following conditions are satisfied:
- there is a list of names available of object-types to which the profiles can be added;
- on the persistence-mechanism of the application two elements must be added to each object, i.e.:
   - a list with profile names;
   - a large binary coded set of data.

Most current persistence-mechanisms satisfy these conditions. The software support is available at this moment as C++ classes.

The profile-support system analyses the binary coded set of data.

The encoding is such that it is possible to deal with:
- unknown profile names;
- unknown attribute names from a known profile; and
- modified definition of profile attributes.

In each of these cases the profile attributes can be viewed but not changed. Nor can the unknown profile names be deleted from the object to which they are assigned. During storage of models with any of these characteristics the original value is stored again. This means that exchange of models between two applications is still possible, while both applications can have at their disposal a different set of profile definitions.

The above stated graphic design language of applicant is determined such that efficient support can be provided in tools which are ritten in type-assigned and compiled implementation languages such as C++. Using the profiles it is possible for the purpose of operations for analysis-export possibilities and the like to dynamically specialize the built-in concepts. The specializations do not have to be mutually exclusive and can build on each other.

In order to make a profiled model using the graphic design language 15 (fig. 2) an initial model 16 is made as designated schematically with arrow 17. The end user can obtain a profiled model 18 by adding profiles to model elements in a second step, as designated schematically with arrow 19. The graphic design language is thus specialized to a specialized - graphic design language 20 by defining profiles, as designated schematically according to arrow 21. The profiled model is thus designed with the specialized graphic design language as designated schematically with arrow 22. The profiles can be defined by the end user himself or originate from an already existing set thereof.

Object type is a concept from the design language, for instance 'action', 'entity', 'trigger' and the like. The objects to which the profiles are assigned are the modeled instantiations, for instance the action "complete data" or the entity "secretariat".

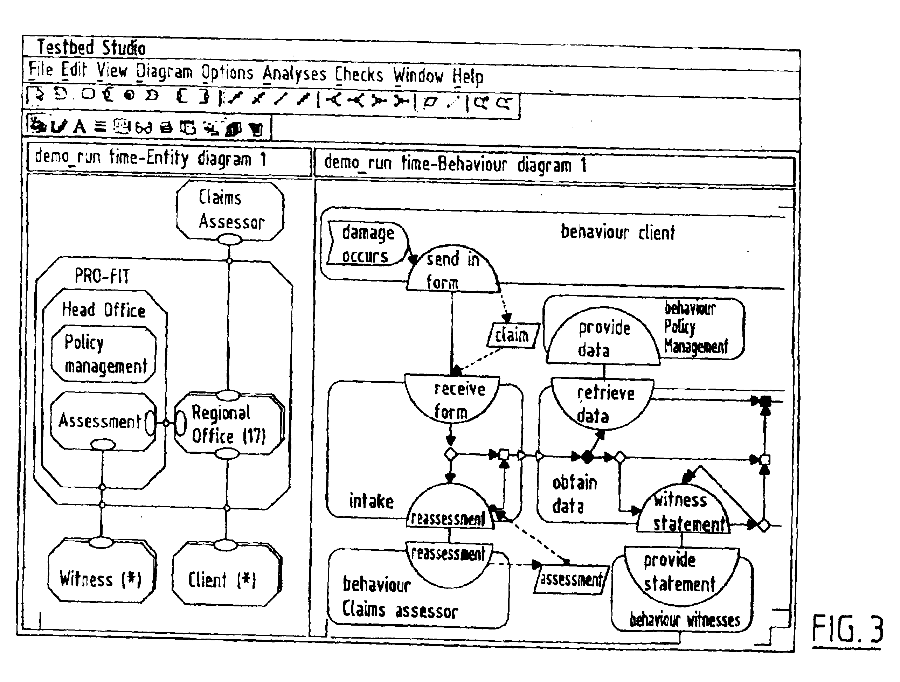

The graphic design language of applicant is supported by a set of software tools which are collectively known as the design studio. Using the design studio an initial process can be designed as illustrated in fig. 3.

The left-hand part of the screen of fig. 3 shows the actors in the processes, the right-hand part of the screen the behaviour thereof, while the right-hand part of the screen also shows items, i.e. data or products with which or on which operations take place; in the present embodiment 'claim' and 'assessment'. Actors are modeled by means of entities. In respect of the actors there is shown in which hierarchical structure they are to be found and how they can co-act. Possible co-action is modeled by means of interaction and the relation between them. Behaviour is modeled by means of actions in a mutual dependence (or independence), which express whether events are mutually dependent, mutually exclusive or the chance with which they can occur. Co-action and information-exchange between process parts is shown explicitly by means of interactions. In respect of the items, the actions are shown by which they are processed, such as read, write, create or delete. For a further description of the design language, reference is made to the first article in the appended list of articles, in which inter alia staff of applicant outline the background to the present invention.

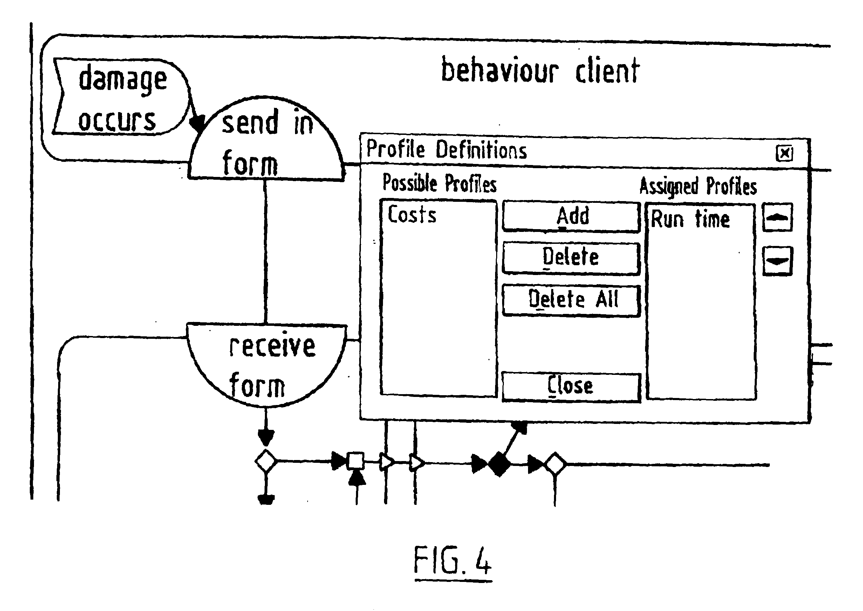

If a run time analysis must be performed on the model of fig. 3, this model can be proiled by assigning the profile run time to the (inter)actions in the model, as indicated in fig. 4.

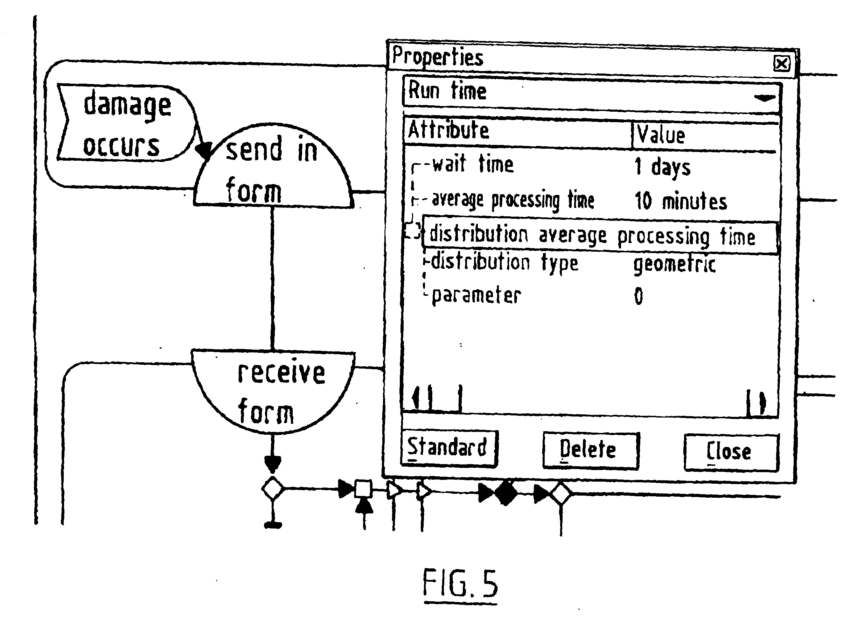

The data required for the run time analysis can now be entered in the model, as indicated in fig. 5, whereafter the calculations can take place with special tool components specific to the relevant profile definitions.

The present invention is not limited to the above described preferred embodiment thereof; the rights sought are defined by the scope of the following claims, within which many modifications can be envisaged.

## Claims

1. Method for the dynamic specialization of a predetermined software-object structure, wherein a set of attributes with assigned type is defined as profile using a profile definition language, and wherein a profile definition is linked to a software-object, wherein the data stored by the software-object is provided with a reference to the profile definitions.

2. Method as claimed in claim 1, wherein the software-object structure is a model which is determined using a relatively thin modeling language.

3. Method as claimed in claim 1 or 2, wherein two or more profiles are linked to the software-object.

4. Method as claimed in claim 1, 2 or 3, wherein a second profile is linked to a first profile linked to a software-object.

5. Method as claimed in any of the claims 1-4, wherein the profile definition language supports one or more of the following concepts:
- built-in types: integer, string, boolean, real, time; currency
- type-construction: enumerated types, struct, union, list, sets, type-alias;
- profile-definition: set of attributes with a type and an optional default value;
- inheritance: a profile-definition can build on a maximum of one other profile definition;
- attributes are identified on the basis of their name;
- predetermined profiles can only be assigned to predetermined object-types; and/or
- determined profiles can always be assigned to determined object-types.

6. Method as claimed in one or more of the claims 1-5, wherein the profile definition is linked to a software-object via a profile interface.

7. Method as claimed in claim 6, wherein the profile interface comprises an extendable software framework implemented in C++.

8. System for applying the method as claimed in any of the foregoing claims, wherein the system comprises:
- one or more processors; and
- one or more memories in which the profile definitions, the object structure and the application data can be stored.
